# EUROPÄISCHE PATENTSCHRIFT

(11) **EP 3 148 096 B1**
(45) Veröffentlichungstag und Bekanntmachung des Hinweises auf die Patenterteilung: **11.09.2019**
(21) Anmeldenummer: 16189881.2
(22) Anmeldetag: 21.09.2016
(51) Int. Cl.: H04B 7/06, H04B 7/08, H04B 7/185

(54) **FLUGGERÄT MIT MEHREREN ANTENNENEINHEITEN**
AIRCRAFT WITH MULTIPLE ANTENNA UNITS
AERONEF COMPRENANT PLUSIEURS ANTENNES

(30) Priorität: 23.09.2015 DE 102015218299
(43) Veröffentlichungstag der Anmeldung: 29.03.2017
(73) Patentinhaber: Airbus Defence and Space GmbH, 82024 Taufkirchen (DE)
(72) Erfinder: RIETH, Dominik, 85521 Ottobrunn (DE); ZIEGLER, Volker, 85662 Hohenbrunn (DE); HELLER, Christoph, 1082MT Amsterdam (NL)
(74) Vertreter: Isarpatent

(56) Entgegenhaltungen:
- EP-A2- 2 693 795
- US-A1- 2007 263 748
- US-A1- 2015 036 656

## Beschreibung

### Technisches Gebiet

Dieses Dokument betrifft ein Fluggerät mit mehreren Antenneneinheiten. Die Offenbarung betrifft insbesondere Fluggeräte mit mehreren Antenneneinheiten, welche Signale in jeweils verschiedenen, nicht-überlappenden Frequenzbändern unabhängig voneinander senden beziehungsweise empfangen.

### Hintergrund

In Fluggeräten wie z.B. Flugzeugen oder Helikoptern ist üblicherweise eine große Anzahl von Antennen verbaut. Diese Antennen sind an verschiedenen Stellen am Flugzeugrumpf oder an den Tragflächen angeordnet erfüllen dabei unterschiedlichste Funktionen.

Eine erste Anwendung von Antennen in Fluggeräten betrifft dabei die Datenkommunikation. Entsprechende Antennen ermöglichen hierbei den Austausch von Sprach, Bild oder sonstigen Nutzdaten zwischen dem Fluggerät und (a) einem weiteren Fluggerät, (b) einem Satellitenkommunikationssystem oder (c) einer Bodenstation wie z.B. einem Tower, einem Gate oder einem Flughafenterminal. Die Datenkommunikation erfolgt beispielsweise in Frequenzbereichen von einigen MHz bis hin zu einigen tausend MHz.

Eine zweite Anwendung von Antennen in Fluggeräten betrifft die Positionsbestimmung. Entsprechende Antennen ermöglichen z.B. die Bestimmung der Höhe über Grund (z.B. Radar-Altimeter RALT) oder der absoluten Position über Meeresniveau (z.B. Global Positioning System GPS). Weitere Anwendungen, welche auf einer relativen Positionsbestimmung aufbauen sind beispielsweise Instrumentenlandesysteme (z.B. Instrument Landing System ILS) oder Kollisionswarn- und Vermeidungssysteme (wie z.B. Traffic Collision Avoidance System TCAS). Je nach Anwendung werden Frequenzbänder bis zu mehreren GHz genutzt.

Weitere Anwendungen von Antennen in Fluggeräten betreffen z.B. Wetterradar (z.B. WXR) oder sonstige Systeme, die die Sicherheit im Flugverkehr erhöhen. Je nach Anwendungsszenario können einzelne Monopol- bzw. Dipol Antennen oder sogenannte Antennen-Arrays zum Einsatz kommen. Um die Ausfallsicherheit der entsprechenden Systeme zu erhöhen, werden in den meisten Fluggeräten redundante Kommunikationssysteme mit entsprechend redundanten Antennen vorgesehen.

Die Integration von zusätzlichen Antenneneinheiten in Fluggeräten ist aufwändig, teuer und durch Faktoren wie Gewicht, Größe und Leistungsverbrauch limitiert. Daher sollte das Nachrüsten von zusätzlichen Antenneneinheiten möglichst verhindert werden.

US 2007/0263748 A1 offenbart eine Vorrichtung mit einer Vielzahl von Antennenelementen, einer Vielzahl von digitalen Signalverarbeitungsvorrichtungen zum Liefern von phasen- und amplitudengewichteten digitalen Basisbandsignalen, einem Beamforming-Prozessor zum Verarbeiten der gewichteten digitalen Basisbandsignale zum adaptiven Bilden einer Vielzahl von Strahlmustern für die Antennenelemente, einer Vielzahl von digitalen Modulatoren zum Umwandeln der digitalen Basisbandsignale in digitale Zwischenfrequenzsignale und einem Modulator zum Modulieren von In-Phasen- und Quadraturkomponenten der digitalen Zwischenfrequenzsignale.

EP 2693795 A1 offenbart ein Verfahren und ein zugehöriges drahtloses Monitor- und Datenanalysesystem. Das Verfahren umfasst die Installation eines oder mehrerer einer Vielzahl von drahtlosen Monitoren an den jeweiligen Orten an Bord eines komplexen Systems, an denen ein drahtloses System von Interesse installiert ist oder zur Installation vorgesehen ist. Das Verfahren kann dann durch die Vielzahl von drahtlosen Monitoren, die das drahtlose System von Interesse emulieren, und das Aufzeichnen von Daten bezüglich der Leistung des drahtlosen Systems von Interesse zu einem oder mehreren aufgezeichneten Zeiten über eine Vielzahl von Betriebsbedingungen des komplexen Systems umfassen. Das Verfahren kann auch durch die Vielzahl von drahtlosen Monitoren, die Daten einschließlich der jeweiligen Standorte der drahtlosen Monitore, die mit den jeweiligen aufgezeichneten Daten und aufgezeichneten Zeiten korreliert sind, erfassen, umfassen. In diesem Zusammenhang können die gesammelten Daten für die Vielzahl von drahtlosen Monitoren für die Analyse des darauf basierenden drahtlosen Systems von Interesse abrufbar sein.

US 2015/0036656 A1 offenbart ein System und Verfahren zur gemeinsamen Nutzung von Antennen eines drahtlosen Kommunikationsgerätes. Das drahtlose Kommunikationsgerät nutzt Mobilfunkantennen, um den Datendurchsatz zu verbessern, indem es einen MIMO-Betrieb (Multiple-in, Multiple out) für eine WLAN-Verbindung (Wireless Local Area Network) herstellt. Die Antennenressourcen werden dynamisch zwischen den Mobilfunkantennen und der Funkantenne verteilt, um einen verbesserten Durchsatz zu erzielen.

Es besteht ein Bedarf, ein Fluggerät mit mehreren Antenneneinheiten anzugeben, welches eine Datenkommunikation mit einer Bodenstation (wie z.B. einem Tower, einem Gate oder einem Flughafenterminal) mit höherer Übertragungsgeschwindigkeit ermöglicht.

Diese Aufgabenstellung wird durch die Gegenstände der unabhängigen Ansprüche gelöst. Vorteilhafte Ausführungsformen ergeben sich aus den abhängigen Ansprüchen.

### Zusammenfassung

Die vorliegende Erfindung schafft ein Fluggerät mit den Merkmalen des Anspruchs 1.

Bei dem Fluggerät kann es sich um ein beliebiges bemanntes Fluggerät (wie z.B. ein Flugzeug oder ein Helikopter) oder ein unbemanntes Fluggerät (wie z.B. eine Drohne) handeln. Des Weiteren kann das Fluggerät für verschiedenste zivile und/oder militärische Anwendungen geeignet sein.

Eine Antenneneinheit oder beide Antenneneinheiten können jeweils ein Antennenelement (z.B. eine Monopol- oder Dipolantenne) oder mehrere Antennenelemente (z.B. einen Antennen-Array) aufweisen. Zusätzlich kann jede Antenneneinheit eine Treiberschaltung zur Modulation der zu übertragenden Signale, zur Demodulation empfangener Signale oder zur Steuerung der Sendeleistung aufweisen.

Im ersten Betriebsmodus können die beiden Antennenelemente voneinander verschiedene Funktionen erfüllen. Wie in den einleitenden Bemerkungen bereits diskutiert, kann eine der zwei Antenneneinheiten eingerichtet sein, im ersten Betriebsmodus Signale zu senden und/oder zu empfangen, um eine der folgenden Funktionen zu erfüllen: Radarhöhenmesser, Wetterradar, Instrumentenlandesystem, Positionsbestimmung mittels globalem Satellitennavigationssystem, oder Kollisionswarn- und Vermeidungssystem. Zudem kann eine der beiden Antenneneinheiten im ersten Betriebsmodus eingerichtet sein, eine Datenübertragung von bzw. zu einer Bodenstation, einem anderen Fluggerät oder einem Satellitenkommunikationssystem zu ermöglichen.

Dabei kann die Bodenstation z.B. ein Tower, ein Gate oder ein Fahrzeug auf dem Flugfeld sein.

Durch das Vorsehen einer zentralen Steuereinheit wird es möglich, die beiden Antenneneinheiten in einen zweiten Betriebsmodus zu versetzen, in dem durch gleichzeitige Ansteuerung der beiden Antenneneinheiten eine Mehrantennen MIMO Kommunikation ermöglicht wird. Auf diese Weise kann die Datenrate bei gleichbleibender Bandbreite und somit die spektrale Effizienz erhöht werden. Umgekehrt kann bei gleichbleibender Datenrate die Qualität des empfangenen Signals verbessert werden, was sich z.B. in einer reduzierten Bitfehlerhäufigkeit wiederspiegelt. Auf diese Weise werden die vorhandenen Antenneneinheiten im Fluggerät genutzt und Mehrantennen MIMO Kommunikation ermöglicht, ohne zusätzliche Antenneneinheiten im Fluggerät einzubauen.

In diesem Dokument wird der Begriff MIMO Übertragungstechnik als Oberbegriff verwendet, der ebenfalls Multiple Input Single Output MISO Datenübertragung von dem Fluggerät an eine externe Antenneneinheit und Single Input Multiple Output SIMO Datenübertragung an das Fluggerät von einer externen Antenneneinheit umfasst. Die zentrale Steuereinheit kann dabei eingerichtet sein, die mindestens zwei Antenneneinheiten entsprechend dem zweiten Betriebsmodus zu steuern, so dass sie das gemeinsame Signal unter Ausnutzung von MISO Übertragungstechnik an eine externe Antenneneinheit mit nur einem Antennenelement übertragen. Ebenso kann die zentrale Steuereinheit eingerichtet sein, die mindestens zwei Antenneneinheiten entsprechend dem zweiten Betriebsmodus zu steuern, so dass sie das gemeinsame Signal unter Ausnutzung von SIMO Übertragungstechnik von einer externen Antenneneinheit mit nur einem Antennenelement empfangen.

Die Steuereinheit umfasst einen Recheneinheit und eine oder mehrere flüchtige oder nicht-flüchtige Speichereinheiten. Beispielsweise handelt es sich bei der Recheneinheit um einen Universalrechner oder um programmierbare Digitalhardware wie z.B. einen digitalen Signalprozessor DSP oder einen Field Programmable Gate Array FPGA. Die Steuereinheit kann ihre Energie aus dem Bordnetz des Fluggeräts beziehen oder eine eigene Energieversorgung aufweisen.

In jedem Fall ist die zentrale Steuereinheit eingerichtet, um die MIMO Funktionalität der beiden Antenneneinheiten im zweiten Betriebsmodus zu unterstützen bzw. zu ermöglichen. Insbesondere ist die zentrale Steuereinheit eingerichtet zum Zusammenführen von Datenströmen des gemeinsamen Signals, wobei die Datenströme über die verschiedenen Antenneneinheiten empfangen werden. Umgekehrt ist die zentrale Steuereinheit eingerichtet zum Trennen eines Datenstroms, welcher über das durch die beiden Antenneneinheiten gebildete Mehrantennensystem übertragen werden soll, in zwei Datenströme, welche den beiden Antenneneinheiten zugeführt werden. Darüber hinaus kann die zentrale Steuereinheit weitere MIMO typische Aufgaben übernehmen wie z.B. Precoding, Beamforming, Kanalschätzung und Schätzung der Interferenz durch andere Kommunikationsteilnehmer.

Um die Antenneneinheiten entsprechend dem zweiten Betriebsmodus anzusteuern, kann die zentrale Steuereinheit mit den Antenneneinheiten elektrisch verbunden sein. Alternativ oder zusätzlich kann die zentrale Steuereinheit ein Funkmodul aufweisen, um Funkverbindungen zu den Antenneneinheiten aufzubauen. Falls die Antenneneinheiten ebenfalls entsprechende Funkmodule aufweisen, um mit dem Funkmodul der zentralen Steuereinheit zu kommunizieren, kann auf eine umfassende Verkabelung im Fluggerät verzichtet werden.

Viele Antenneneinheiten in einem Fluggerät, wie z.B. Antenneneinheiten in einem Radarhöhenmesser, einem Instrumentenlandesystem, einem Kollisionswarn- und Vermeidungssystem oder einem Wetterradar, werden nur während des Flugbetriebes in der Luft benötigt. Daher lässt sich durch Umschalten in den zweiten Betriebsmodus eine verbesserte MIMO Datenübertragung erreichen, ohne die Funktion der Antenneneinheiten während des Fluges zu beeinträchtigen.

Die zentrale Steuereinheit kann eingerichtet sein, die mindestens zwei Antenneneinheiten in dem zweiten Betriebsmodus kohärent zu steuern. Durch die Zuführung eines gemeinsamen Taktes können die getrennten Datenströme in den beiden Antenneneinheiten zeitsynchron gesendet bzw. empfangen werden.

Jede Antenneneinheit kann über jeweils ein Kommunikationsmodul mit der zentralen Steuereinheit elektrisch verbunden sein. Zudem können die Kommunikationsmodule eingerichtet sein, die mindestens zwei Antenneneinheiten entsprechend dem zweiten Betriebsmodus anzusteuern. Falls eine Antenneneinheit mehr als ein Antennenelement aufweist, kann es notwendig sein, jedes Antennenelement der entsprechenden Antenneneinheit über ein separates Kommunikationsmodul mit der zentralen Steuereinheit elektrisch zu verbinden.

Die Kommunikationsmodule können jeweils ein Software Defined Radio SDR Modul aufweisen. Durch die Verwendung eines SDR Moduls lässt sich ein Teil der Signalverarbeitung der Kommunikationsmodule und/oder der zentralen Steuereinheit mit Software verwirklichen. Auf diese Weise kann die Ansteuerung der einzelnen Antenneneinheiten auf einfach und flexible verändert werden, ohne dass entsprechende Hardwarekomponenten ausgetauscht werden müssen. Die Kommunikationsmodule können verteilt im Fluggerät in der Nähe der jeweiligen Antenneneinheiten angeordnet sind. Alternativ können die Kommunikationsmodule in einem Cluster in einem gesonderten Bereich des Fluggeräts angeordnet sein. Letztere Alternative bietet den Vorteil, dass die für die kohärente Ansteuerung der beiden Antenneneinheiten im zweiten Betriebsmodus benötige kohärente Taktgebung mit Hilfe einer kurzen und einfachen SDR Verbindung (SDR Link) realisiert werden kann. Auf diese Weise lässt sich der zusätzliche Verkabelungsaufwand im Fluggerät reduzieren.

Die Offenbarung betrifft außerdem ein Verfahren mit den Merkmalen des Anspruchs 11.

Es ist zu beachten, dass die in diesem Dokument beschriebene Verwendung verschiedener Antenneneinheiten zur Ermöglichung von MIMO-Kommunikation nicht auf Fluggeräte als solche beschränkt ist. Ebenso können die beschriebenen Verfahren und Vorrichtungen auch auf Autos, LKW oder schwimmende Plattformen wie beispielsweise Schiffe oder U-Boote angewendet werden.

Weiterhin ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtung und Systeme in vielfältiger Weise miteinander kombiniert werden. Insbesondere können die Merkmale der Ansprüche in vielfältiger Weise miteinander kombiniert werden.

### Kurze Beschreibung der Figuren

Die Erfindung wird nachfolgend unter Bezugnahme auf die Zeichnungen näher erläutert; in diesen zeigen:
Fig. 1 ein beispielhaftes, schematisch-skizziertes Fluggerät und eine externe Antenneneinheit;
Fig. 2 ein beispielhaftes, schematisch-skizziertes Fluggerät mit drei Antenneneinheiten und einer zentralen Steuereinheit,
Fig. 3 vier Antennenelemente, die über Kommunikationsmodule mit einer zentralen Steuereinheit verbunden sind,
Fig. 4 ein beispielhaftes, schematisch-skizziertes Fluggerät mit drei Antenneneinheiten und einer zentralen Steuereinheit,
Fig. 5 vier Antennenelemente, die über Kommunikationsmodule mit einer zentralen Steuereinheit verbunden sind, und
Fig. 6 ein weiteres, beispielhaftes, schematisch-skizziertes Fluggerät mit drei Antenneneinheiten und einer zentralen Steuereinheit.

### Detaillierte Beschreibung

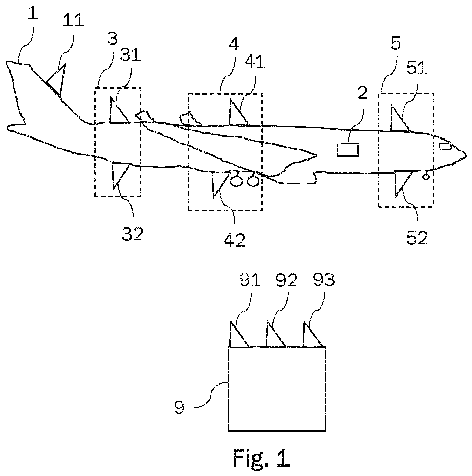

Fig. 1 illustriert ein beispielhaftes, schematisch-skizziertes Flugzeug 1. Das Flugzeug 1 weist drei Antenneneinheiten 3, 4, 5 auf, die jeweils aus zwei Antennenelementen 31, 32, 41, 42, 51, 52 bestehen. Die Antennenelemente 31, 32, 41, 42, 51, 52 sind beispielhaft auf der Oberseite und der Unterseite (oder alternativ links und rechts) des Flugzeugrumpfes angeordnet. Selbstverständlich sind sowohl die Anzahl der Antenneneinheiten 3, 4, 5, die Anzahl der Antennenelemente 31, 32, 41, 42, 51, 52 also auch deren geometrische Anordnung am Flugzeug 1 rein zufällig gewählt und stellen nur eine von vielen Ausführungsformen der vorliegenden Erfindung dar.

Die drei Antenneneinheiten 3, 4, 5 können unterschiedliche Funktionalitäten aufweisen. Beispielsweise wird Antenneneinheit 3 zur Datenübertragung von und zu einem Satellitenkommunikationssystem verwendet, Antenneneinheit 4 ist Teil eines Kollisionswarn- und Vermeidungssystems und Antenneneinheit 5 dient als Wetterradar, um Flüge durch Gewittergebiete zu vermeiden und die zu erwartenden Turbulenzen einschätzen zu können.

Weiterhin zeigt Fig. 1 eine zentrale Steuereinheit 2 die drei Antenneneinheiten 3, 4, 5 wie ein einziges Mehrantennensystem ansteuern kann. Die zentrale Steuereinheit 2 ermöglicht somit ein Umschalten von einem ersten Betriebsmodus der drei Antenneneinheiten 3, 4, 5, indem sie unabhängig voneinander Signale senden und/oder empfangen, in einen zweiten Betriebsmodus, indem sie wie ein einheitliches Mehrantennensystem funktionieren und ein gemeinsames Signal unter Ausnutzung von Multiple Input Multiple Output (MIMO)-Übertragungstechnik übertragen und/oder empfangen.

Wie durch das ausgefahrene Fahrwerk des Flugzeuges 1 angedeutet, befindet sich das Flugzeug 1 auf dem Boden, beispielsweise auf einem Flugfeld. Zusätzlich ist in Fig. 1 eine beispielhafte, externe Antenneneinheit 9 mit drei Antennenelementen 91, 92, 93 gezeigt. Bei Antenneneinheit 9 handelt es sich z.B. um eine Wireless Local Area Network WLAN Router, welcher basierend auf dem IEEE 802.11 Standard mit dem Flugzeug 1 kommuniziert. Insbesondere kann der WLAN Router 9 über seine drei Antennenelemente 91, 92, 93 eine 6x3 MIMO Verbindung zur Datenübertragung mit dem Mehrantennensystem 3, 4, 5 des Flugzeuges 1 herstellen. Der WLAN Router 9 befindet sich z.B. an einem Flughafen-Gate oder einem Flughafen-Terminal.

In der dargestellten Situation, in der sich das Fluggerät 1 auf dem Flugfeld befindet, wird weder die Funktionalität des Kollisionswarn- und Vermeidungssystems noch die Funktionalität des Wetterradars benötigt. Durch die kombinierte Ansteuerung der Antenneneinheiten 3, 4, 5 wird eine Datenratenerhöhung gegenüber dem Fall erzielt, in dem nur eine einzelne Antenneneinheit 11 mit dem WLAN Router 9 kommuniziert. Alternativ kann auch die einzelne Antenneneinheit 11 in die MIMO Übertragung integriert werden, um eine verbesserte 7x3 MIMO Verbindung zum WLAN Router 9 zu erzielen.

In dem dargestellten Beispiel werden die unterschiedlichen Antenneneinheiten 3, 4, 5 im zweiten Betriebsmodus bei derselben Frequenz für die MIMO-Übertragung betrieben und alle Antennenelemente 31, 32, 41, 42, 51, 52 kohärent angesteuert.

Über die zentrale Steuereinheit 2 können die drei Antenneneinheiten 3, 4, 5 wieder in den ersten Betriebsmodus zurückgeschaltet werden und wieder ihre ursprüngliche Funktion wahrnehmen. Das Zurückschalten in den ersten Betriebsmodus kann z.B. vor oder während eines Starts des Flugzeugs 1 stattfinden.

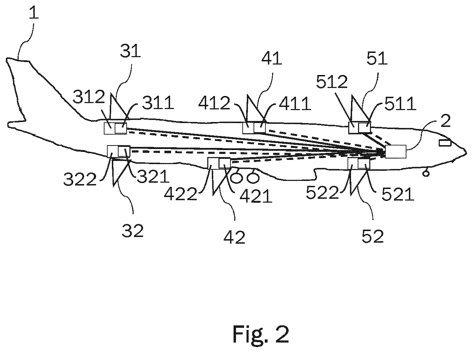

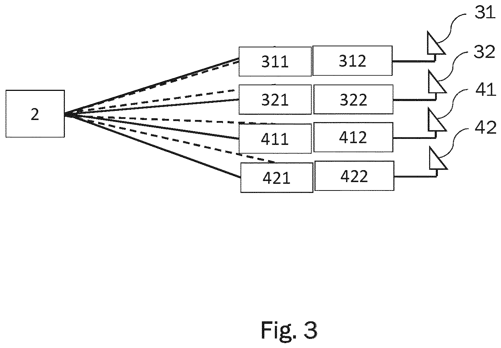

Fig. 2 und Fig. 3 illustrieren eine mögliche erste Ausführungsform, in der die zentrale Steuereinheit 2 über Kommunikationsmodule 311, 321, 411, 421, 511, 521 mit den Antennenelementen 31, 32, 41, 42, 51, 52 elektrisch verbunden sind. In Fig. 3 sind die beiden Kommunikationsmodule 511, 521 und die dazugehörigen Antennenelemente 51, 52 nicht gezeigt. Die Kommunikationsmodule 311, 321, 411, 421, 511, 521 sind mit der Steuereinheit 2 über einen Datenbus verbunden, welcher mit durchgängigen Linien dargestellt ist. Auf dem Datenbus werden unter anderem die Nutzdaten, welche von den Antennenelementen 31, 32, 41, 42, 51, 52 empfangen bzw. gesendet werden, übertragen. In dem dargestellten Beispiel werden die Kommunikationsmodule 311, 321, 411, 421, 511, 521 durch Software Defined Radio SDR Plattformen implementiert, welche über SDR Verbindungen mit der zentralen Steuereinheit 2 verbunden sind. Die SDR Verbindungen (SDR Links) sind in Fig. 2 und Fig. 3 durch gestrichelte Linien dargestellt und gewährleisten eine kohärente Taktgebung auf den verteilten SDR Plattformen. Wie in Fig. 2 gezeigt sind die Kommunikationsmodule 311, 321, 411, 421, 511, 521 in unmittelbarer Nähe zu den Antennenelementen 31, 32, 41, 42, 51, 52 im Flugzeug 1 angeordnet. Optional können zusätzlich Sende- und Empfangsmodule 312, 322, 412, 422, 512, 522 zwischen den Kommunikationsmodulen 311, 321, 411, 421, 511, 521 und den Antennenelementen 31, 32, 41, 42, 51, 52 vorgesehen sein. Wie in Fig. 3 dargestellt sind die Kommunikationsmodule 311, 321, 411, 421, 511, 521 bzw. optional die Sende- und Empfangsmodule 312, 322, 412, 422, 512, 522 über Radio Frequency RF Verbindungen (RF Links) mit den entsprechenden Antennenelementen 31, 32, 41, 42, 51, 52 verbunden.

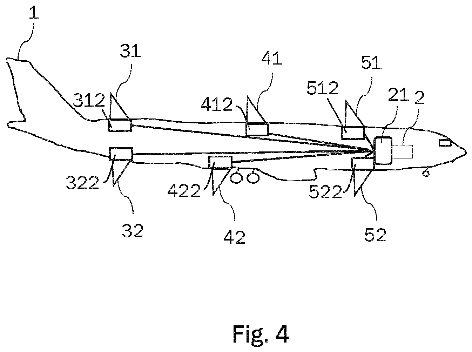

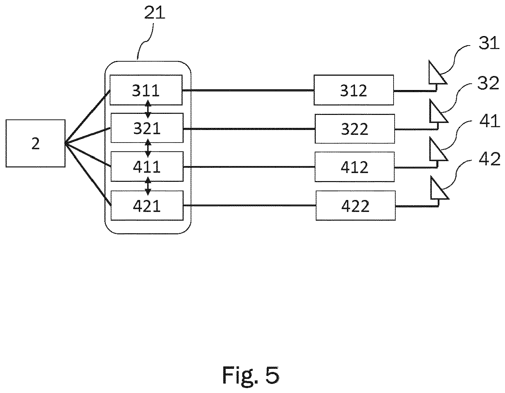

Fig. 4 und Fig. 5 illustrieren eine mögliche zweite Ausführungsform. In Fig. 4 und Fig. 5 bezeichnen die Bezugszeichen gleiche oder ähnliche Vorrichtungen wie die Bezugszeichen in Fig. 2 und Fig. 3. Die zweite Ausführungsform unterscheidet sich von der ersten Ausführungsform insbesondere durch die Anordnung der SDR Plattformen 311, 321, 411, 421, 511, 521 in einem zentralen SDR Cluster 21. Wie in Fig. 4 gezeigt, kann das SDR Cluster 21 in der Nähe der zentralen Steuereinheit 21 angeordnet. Alternativ kann der zentralen SDR Cluster 21 auch an einem beliebigen anderen Ort im Flugzeug 1 angeordnet sein. Gemäß der zweiten Ausführungsform sind nur noch die Sende- und Empfangsmodule 312, 322, 412, 422, 512, 522 in der Nähe der Antennenelemente 31, 32, 41, 42, 51, 52 angeordnet.

Zwischen den SDR Plattformen 311, 321, 411, 421, 511, 521 und den verteilten Sende- und Empfangsmodulen 312, 322, 412, 422, 512, 522 können z.B. digitale oder analoge Signale über Koaxialkabel oder optische Lichtwellenleiter ausgetauscht werden. Die Kommunikation kann beispielsweise basierend auf dem Common Public Radio Interface CPRI Standard oder dem Open Base Station Architecture Initiative OBSAI Standard erfolgen.

Der zentrale SDR Cluster 21 ermöglicht ein kompakte und effiziente Anordnung der SDR Plattformen 311, 321, 411, 421, 511, 521 im Flugzeug 1. Die kohärenten Verbindungen zwischen den einzelnen SDR Plattformen 311, 321, 411, 421, 511, 521 sind kurz und einfach zu realisieren. Insbesondere werden in der zweiten Ausführungsform keine SDR Verbindungen zwischen der zentralen Steuereinheit 2 und dem SDR Cluster 21 benötigt, sondern lediglich SDR Verbindungen innerhalb des SDR Clusters 21, welche in Fig. 5 durch Doppelpfeile angedeutet sind.

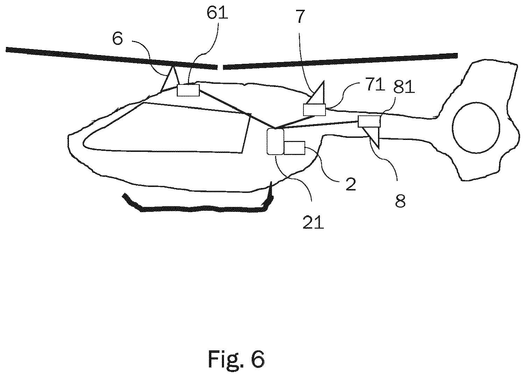

Fig. 6 zeigt ein weiteres mögliches Anwendungsszenario in einem Helikopter. Hier werden drei Antenneneinheiten 6, 7, 8 über einen zentralen SDR Cluster 21 von einer zentralen Steuereinheit 2 angesteuert, um ein Mehrantennensystem zu bilden und über die Antenneneinheiten 6, 7, 8 MIMO- Datenübertragung zu anderen Kommunikationsteilnehmern zu ermöglichen. In dem in Fig. 6 gezeigten Beispiel sind die Antennenelemente 6, 7, 8 über die Sende- und Empfangsmodule 61, 71, 81 mit dem SDR Cluster 21 verbunden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Fluggerät mit mindestens zwei Antenneneinheiten (3, 4, 5) und einer zentralen Steuereinheit (2), wobei
die mindestens zwei Antenneneinheiten (3, 4, 5) eingerichtet sind, in einem ersten Betriebsmodus Signale in jeweils verschiedenen, nicht-überlappenden Frequenzbändern unabhängig voneinander zu senden und/oder empfangen, und
die zentrale Steuereinheit (2) eingerichtet ist, die mindestens zwei Antenneneinheiten (3, 4, 5) in einem zweiten Betriebsmodus derart zu steuern, dass sie in einem gemeinsamen Frequenzband unter Ausnutzung von Multiple Input Multiple Output (MIMO)-Übertragungstechnik ein gemeinsames Signal übertragen und/oder empfangen, **dadurch gekennzeichnet, dass** die zentrale Steuereinheit (2) dazu eingerichtet ist, die mindestens zwei Antenneneinheiten (3, 4, 5) entsprechend dem zweiten Betriebsmodus zu steuern, wenn sich das Fluggerät nicht in der Luft befindet, wobei die mindestens zwei Antenneneinheiten (3, 4, 5) dazu eingerichtet sind, entsprechend dem ersten Betriebsmodus Signale zu senden und/oder zu empfangen, wenn das Fluggerät in der Luft ist, und wobei die zentrale Steuereinheit (2) dazu eingerichtet ist, automatisch eine Landung des Fluggeräts zu erkennen und den Betriebsmodus umzuschalten.

2. Fluggerät nach Anspruch 1, wobei die zentrale Steuereinheit (2) eingerichtet ist, die mindestens zwei Antenneneinheiten (3, 4, 5) entsprechend dem zweiten Betriebsmodus zu steuern, so dass sie das gemeinsame Signal unter Ausnutzung von Multiple Input Single Output (MISO)-Übertragungstechnik an eine externe Antenneneinheit (9) mit nur einem Antennenelement (91, 92, 93) übertragen.

3. Fluggerät nach einem der vorhergehenden Ansprüche, wobei die zentrale Steuereinheit (2) eingerichtet ist, die mindestens zwei Antenneneinheiten (3, 4, 5) entsprechend dem zweiten Betriebsmodus zu steuern, so dass sie das gemeinsame Signal unter Ausnutzung von Single Input Multiple Output (SIMO)-Übertragungstechnik von einer externen Antenneneinheit (9) mit nur einem Antennenelement (91, 92, 93) empfangen.

4. Fluggerät nach einem der vorhergehenden Ansprüche, wobei eine der mindestens zwei Antenneneinheiten (3, 4, 5) eingerichtet ist, im ersten Betriebsmodus Signale zu senden und/oder zu empfangen, um eine der folgenden Funktionen zu erfüllen: Radarhöhenmesser, Wetterradar, Instrumentenlandesystem, Positionsbestimmung mittels globalem Satellitennavigationssystem, oder Kollisionswarn- und Vermeidungssystem.

5. Fluggerät nach einem der vorhergehenden Ansprüche, wobei eine der mindestens zwei Antenneneinheiten (3, 4, 5) ein oder mehrere Antennenelemente (31, 32, 41, 42, 51, 52) aufweist.

6. Fluggerät nach einem der vorhergehenden Ansprüche, wobei die zentrale Steuereinheit (2) eingerichtet ist, die mindestens zwei Antenneneinheiten (3, 4, 5) in dem zweiten Betriebsmodus kohärent zu steuern.

7. Fluggerät nach einem der vorhergehenden Ansprüche, wobei jede Antenneneinheit über jeweils ein Kommunikationsmodul (311, 321, 411, 421, 511, 521) mit der zentralen Steuereinheit (2) elektrisch verbunden ist, und die Kommunikationsmodule (311, 321, 411, 421, 511, 521) eingerichtet sind, die mindestens zwei Antenneneinheiten (3, 4, 5) entsprechend dem zweiten Betriebsmodus anzusteuern.

8. Fluggerät nach Anspruch 7, wobei die Kommunikationsmodule (311, 321, 411, 421, 511, 521) jeweils ein Software Defined Radio, SDR, Modul aufweisen.

9. Fluggerät nach Anspruch 7 oder 8, wobei die Kommunikationsmodule (311, 321, 411, 421, 511, 521) verteilt im Fluggerät in der Nähe der jeweiligen Antenneneinheiten (3, 4, 5) angeordnet sind.

10. Fluggerät nach Anspruch 7 oder 8, wobei die Kommunikationsmodule (311, 321, 411, 421, 511, 521) in einem Cluster in einem gesonderten Bereich des Fluggeräts angeordnet sind.

11. Verfahren zum Ansteuern von mindestens zwei Antenneneinheiten (3, 4, 5) in einem Fluggerät, wobei das Verfahren aufweist:
- Ansteuern der mindestens zwei Antennenelemente (31, 32, 41, 42, 51, 52) entsprechend einem ersten Betriebsmodus, in dem die mindestens zwei Antennenelemente (31, 32, 41, 42, 51, 52) Signale in jeweils verschiedenen, nicht-überlappenden Frequenzbändern unabhängig voneinander senden und/oder empfangen,
- Ansteuern der mindestens zwei Antennenelemente (31, 32, 41, 42, 51, 52) durch eine zentrale Steuereinheit (2) entsprechend einem zweiten Betriebsmodus, in dem die mindestens zwei Antennenelemente (31, 32, 41, 42, 51, 52) ein gemeinsames Signal in einem gemeinsamen Frequenzband unter Ausnutzung von Multiple Input Multiple Output (MIMO)-Übertragungstechnik übertragen und/oder empfangen, **gekennzeichnet durch**
- Steuern der mindestens zwei Antenneneinheiten (3, 4, 5) entsprechend dem zweiten Betriebsmodus mittels der zentralen Steuereinheit (2), wenn sich das Fluggerät nicht in der Luft befindet,
- Senden und/oder Empfangen von Signalen mittels der mindestens zwei Antenneneinheiten (3, 4, 5) entsprechend dem ersten Betriebsmodus, wenn das Fluggerät in der Luft ist, und
- automatisches Erkennen einer Landung des Fluggeräts durch die zentrale Steuereinheit (2) und Umschalten des Betriebsmodus.

12. Verfahren zum Ansteuern von mindestens zwei Antenneneinheiten (3, 4, 5) nach Anspruch 11, aufweisend Umschalten zwischen dem ersten und dem zweiten Betriebsmodus durch die zentrale Steuereinheit (2).

## Claims

1. Aircraft having at least two antenna units (3, 4, 5) and a central control unit (2), wherein
the at least two antenna units (3, 4, 5) are configured so as, in a first mode of operation, to send and/or receive signals in respectively different, nonoverlapping frequency bands independently of one another, and
the central control unit (2) is configured to control the at least two antenna units (3, 4, 5) in a second mode of operation such that they transmit and/or receive a common signal in a common frequency band by making use of multiple input multiple output (MIMO) transmission technology,
**characterized in that**
the central control unit (2) is configured to control the at least two antenna units (3, 4, 5) in accordance with the second mode of operation when the aircraft is not in the air, wherein the at least two antenna units (3, 4, 5) are configured to send and/or receive signals in accordance with the first mode of operation when the aircraft is in the air, and wherein the central control unit (2) is configured to automatically detect landing of the aircraft and to change over the mode of operation.

2. Aircraft according to Claim 1, wherein the central control unit (2) is configured to control the at least two antenna units (3, 4, 5) in accordance with the second mode of operation, so that they transmit the common signal to an external antenna unit (9) having only one antenna element (91, 92, 93) by making use of multiple input single output (MISO) transmission technology.

3. Aircraft according to either of the preceding claims, wherein the central control unit (2) is configured to control the at least two antenna units (3, 4, 5) in accordance with the second mode of operation, so that they receive the common signal from an external antenna unit (9) having only one antenna element (91, 92, 93) by making use of single input multiple output (SIMO) transmission technology.

4. Aircraft according to one of the preceding claims, wherein one of the at least two antenna units (3, 4, 5) is configured to send and/or receive signals in the first mode of operation in order to perform one of the following functions: radar altimeter, weather radar, instrument landing system, position determination by means of the global satellite navigation system, or collision warning and avoidance system.

5. Aircraft according to one of the preceding claims, wherein one of the at least two antenna units (3, 4, 5) has one or more antenna elements (31, 32, 41, 42, 51, 52) .

6. Aircraft according to one of the preceding claims, wherein the central control unit (2) is configured to control the at least two antenna units (3, 4, 5) coherently in the second mode of operation.

7. Aircraft according to one of the preceding claims, wherein each antenna unit is electrically connected to the central control unit (2) via a respective communication module (311, 321, 411, 421, 511, 521), and the communication modules (311, 321, 411, 421, 511, 521) are configured to actuate the at least two antenna units (3, 4, 5) in accordance with the second mode of operation.

8. Aircraft according to Claim 7, wherein the communication modules (311, 321, 411, 421, 511, 521) each have a software defined radio, SDR, module.

9. Aircraft according to Claim 7 or 8, wherein the communication modules (311, 321, 411, 421, 511, 521) are in a distributed arrangement in the aircraft close to the respective antenna units (3, 4, 5) .

10. Aircraft according to Claim 7 or 8, wherein the communication modules (311, 321, 411, 421, 511, 521) are arranged in a cluster in a separate area of the aircraft.

11. Method for actuating at least two antenna units (3, 4, 5) in an aircraft, wherein the method involves:
- actuating the at least two antenna elements (31, 32, 41, 42, 51, 52) in accordance with a first mode of operation, in which the at least two antenna elements (31, 32, 41, 42, 51, 52) send and/or receive signals in respectively different, nonoverlapping frequency bands independently of one another,
- actuating the at least two antenna elements (31, 32, 41, 42, 51, 52) by means of a central control unit (2) in accordance with a second mode of operation, in which the at least two antenna elements (31, 32, 41, 42, 51, 52) transmit and/or receive a common signal in a common frequency band by making use of multiple input multiple output (MIMO) transmission technology, **characterized by**
- controlling the at least two antenna units (3, 4, 5) in accordance with the second mode of operation by means of the central control unit (2) when the aircraft is not in the air,
- sending and/or receiving signals by means of the at least two antenna units (3, 4, 5) in accordance with the first mode of operation when the aircraft is in the air, and
- automatically detecting landing of the aircraft by means of the central control unit (2) and changing over the mode of operation.

12. Method for actuating at least two antenna units (3, 4, 5) according to Claim 11, involving changing over between the first and second modes of operation by means of the central control unit (2) .

## Revendications

1. Aéronef comprenant au moins deux unités d'antenne (3, 4, 5) et une unité de commande centrale (2),
les au moins deux unités d'antenne (3, 4, 5) étant adaptées pour émettre et/ou recevoir indépendamment, dans un premier mode de fonctionnement, des signaux dans des bandes de fréquences respectives différentes, qui ne se chevauchent pas, et
l'unité de commande centrale (2) étant adaptée pour commander les au moins deux unités d'antenne (3, 4, 5) dans un deuxième mode de fonctionnement de manière à ce qu'elles transmettent et/ou reçoivent un signal commun dans une bande de fréquences commune à l'aide d'une technologie de transmission à entrées multiples et à sorties multiples (MIMO : Multiple Input Multiple Output),
**caractérisé en ce que**
l'unité de commande centrale (2) est adaptée pour commander les au moins deux unités d'antenne (3, 4, 5) selon le deuxième mode de fonctionnement lorsque l'aéronef n'est pas dans les airs, les au moins deux unités d'antenne (3, 4, 5) étant adaptées pour émettre et/ou recevoir des signaux selon le premier mode de fonctionnement lorsque l'aéronef est dans les airs, et l'unité de commande centrale (2) étant adaptée pour détecter automatiquement un atterrissage de l'aéronef et pour commuter le mode de fonctionnement.

2. Aéronef selon la revendication 1, l'unité de commande centrale (2) étant adaptée pour commander les au moins deux unités d'antenne (3, 4, 5) selon le deuxième mode de fonctionnement de manière à transmettre le signal commun à une unité d'antenne externe (9) comportant un seul élément d'antenne (91, 92, 93) l'aide d'une technique de transmission à entrées multiples et sortie unique (MISO : Multiple Input Single Output).

3. Aéronef selon l'une des revendications précédentes, l'unité de commande centrale (2) étant disposée pour commander les au moins deux unités d'antenne (3, 4, 5) selon le deuxième mode de fonctionnement de manière à recevoir le signal commun à l'aide de la technique de transmission à entrée unique et sorties multiples (SIMO : Single Input Multiple Output) depuis une unité d'antenne externe (9) comportant un seul élément d'antenne (91, 92, 93).

4. Aéronef selon l'une des revendications précédentes, l'une au moins des deux unités d'antenne (3, 4, 5) étant adaptée pour transmettre et/ou recevoir des signaux dans le premier mode de fonctionnement pour remplir l'une des fonctions suivantes : altimètre radar, radar météorologique, système d'atterrissage aux instruments, positionnement au moyen du système de navigation satellites ou système d'alerte et d'évitement de collision.

5. Aéronef selon l'une des revendications précédentes, l'une au moins des deux unités d'antenne (3, 4, 5) comportant au moins un élément d'antenne (31, 32, 41, 42, 51, 52) .

6. Aéronef selon l'une des revendications précédentes, l'unité de commande centrale (2) étant adaptée pour commander de manière cohérente les au moins deux unités d'antenne (3, 4, 5) dans le deuxième mode de fonctionnement.

7. Aéronef selon l'une des revendications précédentes, chaque unité d'antenne étant reliée électriquement à l'unité de commande centrale (2) par le biais d'un module de communication respectif (311, 321, 411, 421, 511, 521) et les modules de communication (311, 321, 411, 421, 511, 521) étant adaptés pour commander les au moins deux unités d'antenne (3, 4, 5) selon le deuxième mode de fonctionnement.

8. Aéronef selon la revendication 7, les modules de communication (311, 321, 411, 421, 511, 521) comprenant chacun un module radio défini par logiciel (SDR : Software Defined Radio).

9. Aéronef selon la revendication 7 ou 8, les modules de communication (311, 321, 411, 421, 511, 521) étant disposés de manière répartie dans l'aéronef à proximité des unités d'antenne respectives (3, 4, 5).

10. Aéronef selon la revendication 7 ou 8, les modules de communication (311, 321, 411, 421, 511, 521) étant disposés dans un regroupement (Cluster) dans une zone séparée de l'aéronef.

11. Procédé de commande d'au moins deux antennes (3, 4, 5) dans un aéronef, le procédé comprenant les étapes suivantes :
- commander les au moins deux éléments d'antenne (31, 32, 41, 42, 51, 52) selon un premier mode de fonctionnement dans lequel les au moins deux éléments d'antenne (31, 32, 41, 42, 51, 52) émettent et/ou reçoivent indépendamment des signaux dans des bandes de fréquences respectivement différentes qui ne se chevauchent pas,
- commander les au moins deux éléments d'antenne (31, 32, 41, 42, 51, 52) par le biais d'une unité de commande centrale (2) selon un deuxième mode de fonctionnement dans lequel les au moins deux éléments d'antenne (31, 32, 41, 42, 51, 52) transmettent et/ou reçoivent un signal commun dans une bande de fréquences commune à l'aide la technique de transmission à entrées multiples et sorties multiples (MIMO : Multiple Input Multiple Output),
**caractérisé par** les étapes suivantes
- commander les au moins deux unités d'antenne (3, 4, 5) selon le deuxième mode de fonctionnement au moyen de l'unité de commande centrale (2) lorsque l'aéronef n'est pas dans les airs,
- émettre et/ou recevoir des signaux au moyen des au moins deux unités d'antenne (3, 4, 5) selon le premier mode de fonctionnement lorsque l'aéronef est dans les airs, et
- détecter automatiquement un atterrissage de l'aéronef par le biais de l'unité de commande centrale (2) et commuter le mode de fonctionnement.

12. Procédé de commande d'au moins deux unités d'antenne (3, 4, 5) selon la revendication 11, comprenant l'étape suivante :
commuter entre le premier et le deuxième mode de fonctionnement par le biais de l'unité de commande centrale (2).
